# EUROPÄISCHE PATENTSCHRIFT

(11) **EP 3 233 419 B1**
(45) Veröffentlichungstag und Bekanntmachung des Hinweises auf die Patenterteilung: **06.02.2019**
(21) Anmeldenummer: 15828648.4
(22) Anmeldetag: 21.12.2015
(51) Int. Cl.: B29C 49/42, B29C 49/46, B29C 49/06, B29C 49/36, B29C 49/64, B29L 31/00

(54) **MASCHINE ZUR HERSTELLUNG VON MIT EINEM FLÜSSIGEN FÜLLGUT GEFÜLLTEN BEHÄLTERN AUS VORFORMLINGEN AUS EINEM THERMOPLASTISCHEN MATERIAL**
MACHINE FOR PRODUCTION OF CONTAINERS FILLED WITH A LIQUID PRODUCT FROM PREFORMS MADE FROM A THERMOPLASTIC MATERIAL
MACHINE DE PRODUCTION DE RÉCIPIENTS REMPLIS D'UN PRODUIT DE REMPLISSAGE LIQUIDE À PARTIR DE PRÉFORMES EN MATIÈRE THERMOPLASTIQUE

(30) Priorität: 19.12.2014 DE 102014018778
(43) Veröffentlichungstag der Anmeldung: 25.10.2017
(73) Patentinhaber: KHS Corpoplast GmbH, 22145 Hamburg (DE)
(72) Erfinder: LINKE, Michael, 22159 Hamburg (DE); BAUMGARTE, Rolf, 22926 Ahrensburg (DE)
(74) Vertreter: Hausfeld, Norbert
(86) Internationale Anmeldenummer: PCT/EP2015/002573
(87) Internationale Veröffentlichungsnummer: WO 2016/096145

(56) Entgegenhaltungen:
- DE-A1- 10 063 795
- DE-A1-102010 007 541
- US-A- 4 850 850
- US-A1- 2011 123 666

## Beschreibung

Die vorliegende Erfindung betrifft eine Maschine zur Herstellung von mit einem flüssigen Füllgut gefüllten Behältern aus Vorformlingen aus einem thermoplastischen Material.

Herkömmlich werden Behälter, insbesondere Flaschen, im Blasformverfahren durch ein unter Druck in einen vorgeheizten Vorformling einströmendes Formgas geformt und in einem zweiten Schritt mit einem Füllgut, insbesondere einem flüssigen Füllgut, befüllt. Zur rationelleren Herstellung sind in letzter Zeit Verfahren entwickelt worden, bei denen der vorgeheizte Vorformling nicht durch ein Druckgas sondern durch das unter Druck zugeführte flüssige Füllgut in einem Schritt geformt und gefüllt werden kann. Ein solches Verfahren ist z.B. aus der DE 10 2010 007 541 A1 bekannt.

Vorformlinge für die bekannten Verfahren bestehen aus einem thermoplastischen Kunststoff, beispielsweise PET, PE oder PP, und werden üblicherweise im Spritzgussverfahren hergestellt. Für die Umformung in Behälter ist es dabei unerheblich, ob die Vorformlinge vorher gelagert werden oder unmittelbar nach ihrer Herstellung dem Umformprozess zugeführt werden.

Damit ein Vorformling in einen Behälter umgeformt werden kann, wird er thermisch konditioniert, also insbesondere erwärmt und mit einem geeigneten Temperaturprofil versehen. Dabei wird der Körper des Vorformlings z.B. auf ca. 120 °C erwärmt und formbar, während der Mündungsbereich nur deutlich niedrigere Temperaturen erreichen darf, da der Vorformling am Mündungsbereich in der Form- und Füllmaschine gehalten wird und sich unter den dort üblichen Haltekräften nicht verformen darf.

Die Glastemperatur der üblicherweise verwendeten thermoplastischen Materialien, oberhalb der sich das Material rissfrei verformen lässt, liegt bei ca. 70 °C. Diese Temperatur darf während der gesamten Umformung nicht unterschritten werden.

Die Vorformlinge bzw. geformten Behälter werden auf Transporträdern durch die Maschine bewegt, die Halterungen für Vorformlinge bzw. Behälter aufweisen. Dabei gibt es Prozessräder, die z.B. mit den Form- und Füllstationen oder den Verschließstationen der Maschine kombiniert sind, und auf denen der Vorformling geformt und gefüllt bzw. verschlossen wird, oder reine Transporträder, auf denen der Vorformling bzw. der Behälter von einer Station zur nächsten transportiert wird.

Auf dem Prozessrad für die Formung und Füllung ist ein großer Abstand zwischen den einzelnen Vorformlingen erforderlich, da die Form- und Füllstationen ausreichend Platz benötigen. Bei der thermischen Konditionierung ist ein engerer Abstand hingegen vorteilhaft, da die Vorformlinge in einem relativ kleinen Ofen thermisch konditioniert werden müssen.

Die Anpassung der Abstände erfolgt über Transferräder, die entweder teleskopierbare oder schwenkbare Arme aufweisen. Mit teleskopierbaren Armen können die Abstände der Vorformlinge zueinander durch Ausfahren der Arme eingestellt werden. Sind die Arme kurz, ist der Abstand von benachbarten Vorformlingen klein, sind die Arme lang, ist der Abstand groß. Transferräder mit schwenkbaren Armen haben eine fest vorgegebene Armläge. Durch horizontales Schwenken der Arme kann der Abstand eingestellt werden.

Beiden Varianten ist gemein, dass die teilweise komplizierten Mechaniken regelmäßig gewartet und geschmiert werden müssen.

Flaschenabfüllmaschinen weisen normalerweise einen trockenen Bereich und einen nassen Bereich auf. Bei der Formung und Abfüllung von Flaschen kommt es immer wieder zu Füllgutverlusten, beispielsweise durch vertropftes Füllgut oder überschäumende Behälter, insbesondere bei der Druckentlastung von kohlensäurehaltigen Füllgütern vor dem Verschließen des Behälters. Der Bereich um die Form- und Füllstationen bis zum Verschluss der Flaschen ist deshalb der Nassbereich. Der den Form- und Füllstationen vorgelagerte Bereich, in dem die Vorformlinge thermisch konditioniert werden, sollte hingegen trocken gehalten werden.

Im Nassbereich sind die Anforderungen an die Wartung der beweglichen Maschinenteile höher als im Trockenbereich, da die Maschine regelmäßig gereinigt und desinfiziert werden muss. Bewegliche Teile, die mit dem Füllgut in Berührung kommen, müssen einfach genug aufgebaut sein, um sicher und schnell gereinigt werden zu können.

Um die Verschleppung von Feuchtigkeit aus den Nassbereich in den Trockenbereich zu verhindern, verfügen solche Maschinen üblicherweise über eine Schleuse mit einer Schleusenkammer, an deren Eingang sich der Trockenbereich und an deren Ausgang sich der Nassbereich befindet.

Es ist Aufgabe der vorliegenden Erfindung, eine Maschine zur Herstellung von mit einem flüssigen Füllgut gefüllten Behältern aus Vorformlingen vorzuschlagen, die leichter zu reinigen und desinfizieren ist, als die aus dem Stand der Technik bekannten Maschinen.

Diese Aufgabe wird erfindungsgemäß gelöst durch eine Maschine zur Herstellung von mit einem flüssigen Füllgut gefüllten Behältern aus Vorformlingen aus einem thermoplastischen Material, die eine Heizstrecke zur thermischen Konditionierung der Vorformlinge in einem Trockenbereich der Maschine sowie eine Form- und Füllstrecke zur gleichzeitigen Formung und Füllung der Behälter innerhalb einer Form durch unter Druck in den Vorformling eingebrachtes Füllgut in einem Nassbereich der Maschine sowie Transporträder zum Transport der Vorformlinge bzw. geformten Behälter durch die Maschine umfasst. Der Abstand von benachbarten Vorformlingen in der Heizstrecke ist geringer als in der Form- und Füllstrecke und die Vergrößerung der Abstände der Vorformlinge zwischen der Heizstrecke und der Form- und Füllstrecke erfolgt mittels eines Transferrades. Der Trockenbereich der Maschine ist durch eine Schleuse mit einer Schleusenkammer vom Nassbereich der Maschine abgetrennt. Die erfindungsgemäße Maschine ist dadurch gekennzeichnet, dass das Transferrad zur Vergrößerung der Abstände der Vorformlinge ganz oder zumindest teilweise vor der Schleuse angeordnet ist.

Das Transferrad zur Vergrößerung der Abstände der Vorformlinge ist komplexer aufgebaut als die anderen Transporträder. Es kann beispielsweise über teleskopierbare und/oder schwenkbare Arme verfügen. Durch die erfindungsgemäße Anordnung ist sichergestellt, dass sich das Transferrad im Trockenbereich der Maschine befindet und nicht durch Füllgut aus dem Nassbereich verunreinigt werden kann. Die beispielsweise teleskopierbaren Arme müssen für einen problemlosen Lauf der Maschine geschmiert sein. Auf Laufflächen haftendes Füllgut wäre schwer zu reinigen und würde den Lauf der Maschine beeinträchtigen.

Zum platzsparenden Aufbau der Maschine ist es möglich, das Transferrad zur Vergrößerung der Abstände der Vorformlinge teilweise in der Schleusenkammer zu positionieren. In der Schleusenkammer unmittelbar hinter dem Eingang auf der Seite des Trockenbereichs tritt praktisch keine Verunreinigung durch Füllgut auf. Die Maschine kann somit platzsparend und mit kürzeren Wegen angelegt werden, so dass die thermisch konditionierten Vorformlinge schnellstmöglich der Form- und Füllstrecke zugeführt werden können. Vorzugsweise sollte die Drehachse des Transferrades zur Vergrößerung der Abstände der Vorformlinge jedoch außerhalb der Schleusenkammer im Trockenbereich angeordnet sein. Der Übergabepunkt zwischen dem Transferrad und dem nachfolgenden Transportrad kann sich vorteilhaft in der Schleusenkammer befinden.

Vorzugsweise ist mindestens ein Transportrad vollständig innerhalb der Schleusenkammer angeordnet. So ist das Transferrad am Eingang der Schleusenkammer auf der Seite des Trockenbereichs und ein Transportrad am Ausgang der Schleusenkammer auf der Seite des Nassbereichs angeordnet, die nicht in direktem Kontakt miteinanderstehen. Durch das dazwischen befindliche, vollständig in der Schleusenkammer angeordnete Transportrad wird ein Eintrag von Füllgut in den Trockenbereich wirkungsvoll verhindert.

Die Schleusenkammer kann mehrere voneinander wenigstens teilweise getrennte Kammerbereiche aufweisen.

Das Transferrad kann insbesondere im Eingabebereich einen anderen Teilungsabstand aufweisen als im Ausgabebereich. Vorzugsweise ist der Teilungsabstand im Eingabebereich kleiner als im Ausgabebereich.

Ein Transportrad weist vorzugsweise einen konstanten Teilungsabstand auf, der insbesondere dem Abstand der Form- und Füllstationen an der Form- und Füllstrecke entspricht, also insbesondere dem Teilungsabstand des Form- und Füllrads.

Ein Ausführungsbeispiel der Erfindung wird im Folgenden anhand der beigefügten Abbildung näher erläutert, die Folgendes darstellt:

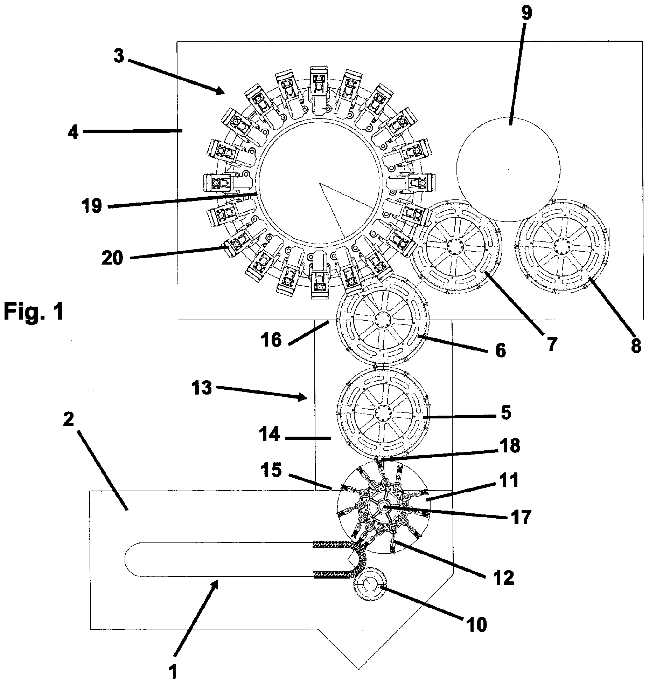

- Fig. 1: zeigt schematisch den Aufbau einer erfindungsgemäßen Maschine zur Herstellung von gefüllten Behältern.

Es versteht sich für den Fachmann von selbst, dass die hier dargestellten Zeichnungen lediglich zur Veranschaulichung des Prinzips der Erfindung dienen sollen und nur schematisch und nicht maßstabsgerecht wiedergegeben sind. Insbesondere dienen die dargestellten Abmessungen aller Elemente nur der Veranschaulichung. Die tatsächlichen Abmessungen und Größenverhältnisse kann der Fachmann frei aufgrund seiner Fachkenntnisse bestimmen.

Figur 1 zeigt schmatisch eine erfindungsgemäße Maschine zur Herstellung von mit einem flüssigen Füllgut gefüllten Behältern aus Vorformlingen aus einem thermoplastischen Material. Die Maschine umfasst eine Heizstrecke 1 zur thermischen Konditionierung der Vorformlinge in einem Trockenbereich 2 der Maschine sowie eine Form- und Füllstrecke 3, entlang der Vorformlinge an einem Form- und Füllrad 19 geführt werden. Hier befinden sich mehrere Form- und Füllstationen 20 zur gleichzeitigen Formung und Füllung der Behälter aus den Vorformlingen innerhalb einer Form durch unter Druck in den Vorformling eingebrachtes Füllgut in einem Nassbereich 4 der Maschine.

Weiter verfügt die Maschine über mehrere Transporträder 5, 6, 7, 8 zum Transport der Vorformlinge bzw. geformten Behälter durch die Maschine. Im Anschluss an die Form- und Füllstrecke 3 werden die geformten und gefüllten Behälter mittels des Transportrades 7 zu einer hier nicht weiter interessierenden Verschließstation 9 transportiert.

Ein Transportrad 10 versorgt die Heizstrecke 1 mit Vorformlingen. Die Transporträder 5, 6, 7, 8, 10 sind derart gestaltet, dass der Abstand von benachbarten Vorformlingen in der Heizstrecke 1 geringer ist als in der Form- und Füllstrecke 3. Die am Ende der Heizstrecke 1 thermisch konditionierten Vorformlinge müssen deshalb auf den größeren Abstand gebracht werden, der in der Form- und Füllstrecke 3 erforderlich ist. Hierfür wird ein Transferrad 11 mit schwenkbaren Armen 12 eingesetzt. Solche Räder sind allgemein bekannt. Alternativ könnte auch ein Transferrad mit teleskopischen Armen eingesetzt werden, die über eine Kurvensteuerung den Radius der Arme bei einer Drehung des Rades verändern, so dass bei kurzen Armen enge Abstände und bei langen Armen weitere Abstände zwischen benachbarten Vorformlingen zustande kommen.

Zur Trennung des Trockenbereichs 2 vom Nassbereich 4 der Maschine ist eine Schleuse 13 mit einer Schleusenkammer 14 vorgesehen. Die Maschinenkomponenten sind so angeordnet, dass sich die Drehachse 17 des komplex aufgebauten Transferrad 11 im Trockenbereich befindet und das Transferrad 11 lediglich teilweise in der Schleusenkammer 14 unmittelbar hinter deren Eingang 15 läuft. Vollständig innerhalb der Schleusenkammer befindet sich das Transportrad 5, so dass sich der Übergabepunkt 18 zwischen dem Transferrad 11 und dem Transportrad 5 ebenfalls in der Schleusenkammer 14 befindet. Das Transportrad 5 übergibt die zugeführten Vorformlinge an das Transportrad 6, das wiederum teilweise in der Schleusenkammer 14 und teilweise im Nassbereich 4 hinter dem Ausgang 16 der Schleusenkammer 14 läuft. Eine Verschleppung von Füllgut aus dem Nassbereich 4 in den Trockenbereich 2 ist damit in der Praxis ausgeschlossen. Das komplex aufgebaute Transferrad 11 kann nicht mit Füllgut kontaminiert werden. Die Reinigung und Wartung wird erheblich vereinfacht.

## Patentansprüche

1. Maschine zur Herstellung von mit einem flüssigen Füllgut gefüllten Behältern aus Vorformlingen aus einem thermoplastischen Material umfassend
eine Heizstrecke (1) zur thermischen Konditionierung der Vorformlinge in einem Trockenbereich (2) der Maschine,
eine Form- und Füllstrecke (3) zur gleichzeitigen Formung und Füllung der Behälter innerhalb einer Form durch unter Druck in den Vorformling eingebrachtes Füllgut in einem Nassbereich (4) der Maschine
und Transporträder (5,6,7,8,10) zum Transport der Vorformlinge bzw. der geformten Behälter durch die Maschine,
wobei der Abstand von benachbarten Vorformlingen in der Heizstrecke (1) geringer ist als in der Form- und Füllstrecke (3)
und die Vergrößerung der Abstände der Vorformlinge zwischen der Heizstrecke (1) und der Form- und Füllstrecke (3) mittels eines Transferrades (11) erfolgt,
und der Trockenbereich (2) der Maschine durch eine Schleuse (13) mit einer Schleusenkammer (14) vom Nassbereich (4) der Maschine abgetrennt ist,
**dadurch gekennzeichnet, dass**
das Transferrad (11) zur Vergrößerung der Abstände der Vorformlinge ganz oder zumindest teilweise vor der Schleuse (13) im Trockenbereich (2) angeordnet ist.

2. Maschine nach Anspruch 1, **dadurch gekennzeichnet, dass** das Transferrad (11) zur Vergrößerung der Abstände der Vorformlinge über teleskopierbare und/oder schwenkbare Arme (12) verfügt.

3. Maschine nach Anspruch 1 oder 2, **dadurch gekennzeichnet, dass** sich der Übergabepunkt (18) zwischen dem Transferrad (11) und dem nachfolgenden Transportrad (5) in der Schleusenkammer (14) befindet.

4. Maschine nach einem der Ansprüche 1 bis 3, **dadurch gekennzeichnet, dass** das Transferrad (11) teilweise innerhalb der Schleusenkammer (14) angeordnet ist.

5. Maschine nach einem der Ansprüche 1 bis 4, **dadurch gekennzeichnet, dass** die Drehachse (17) des Transferrads (11) außerhalb der Schleusenkammer (14) angeordnet ist.

6. Maschine nach einem der Ansprüche 1 bis 5, **dadurch gekennzeichnet, dass** mindestens ein Transportrad (5) vollständig innerhalb der Schleusenkammer (14) angeordnet ist.

## Claims

1. Machine for the production of containers filled with a liquid product from preforms made from a thermoplastic material, comprising
a heating section (1) for thermal conditioning of the preforms in a dry area (2) of the machine;
a forming and filling section (3) for simultaneous forming and filling of the containers within a mould with a product introduced into the preform under pressure, in a wet area (4) of the machine
and transport wheels (5, 6, 7, 8, 10) for transport of the preforms and/or the formed containers through the machine;
whereby the distance of neighbouring preforms in the heating section (1) is smaller than in the forming and filling section (3)
and the increasing of the distances of the preforms between the heating section (1) and the forming and filling section (3) takes place by means of a transfer wheel (11);
and the dry area (2) of the machine is separated from the wet area (4) through a lock (13) with a lock chamber (14);
**characterised in that**
the transfer wheel (11) for increasing the distances of the preforms is arranged, fully or at least partially, upstream of the lock (13) in the dry area (2).

2. Machine according to claim 1, **characterised in that** the transfer wheel (11) for increasing the distances of the preforms is provided with telescoping and/or pivoting arms (12).

3. Machine according to claim 1 or 2, **characterised in that** the transfer point (18) between the transfer wheel (11) and the subsequent transport wheel (5) is situated in the lock chamber (14).

4. Machine according to any one of the claims 1 to 3, **characterised in that** the transfer wheel (11) is partially arranged within the lock chamber (14).

5. Machine according to any one of the claims 1 to 4, **characterised in that** the rotary axis (17) of the transfer wheel (11) is arranged outside the lock chamber (14).

6. Machine according to any one of the claims 1 to 5, **characterised in that** at least one transport wheel (5) is fully arranged within the lock chamber (14).

## Revendications

1. Machine de production, à partir de préformes en un matériau thermoplastique, de récipients remplis d'un produit de remplissage liquide, comportant
dans une zone sèche (2) de la machine, une section de chauffage (1) pour le conditionnement thermique des préformes,
dans une zone humide (4) de la machine, une section de moulage et de remplissage (3) pour le moulage et le remplissage simultanés des récipients à l'intérieur d'un moule par l'introduction sous pression dans la préforme d'un produit de remplissage,
et des roues de transport (5,6,7,8,10) pour transporter les préformes ou les récipients moulés à travers la machine,
l'espacement entre les préformes voisines étant plus petit dans la section de chauffage (1) que dans la section de moulage et de remplissage (3),
et l'augmentation, entre la section de chauffage (1) et la section de moulage et de remplissage (3), de l'espacement des préformes ayant lieu au moyen d'une roue de transfert (11),
et la zone sèche (2) de la machine étant séparée de la zone humide (4) de la machine par un sas (13) avec une chambre de sas (14),
**caractérisée en ce que**
la roue de transfert (11) assurant l'augmentation de l'espacement des préformes est entièrement ou en partie au moins agencée devant le sas (13) dans la zone sèche (2).

2. Machine selon la revendication 1, **caractérisée en ce que** la roue de transfert (11) assurant l'augmentation de l'espacement des préformes est dotée de bras (12) télescopiques et/ou pivotants.

3. Machine selon la revendication 1 ou 2, **caractérisée en ce que** le point de transfert (18) entre la roue de transfert (11) et la roue de transport (5) se trouve dans la chambre de sas (14).

4. Machine selon l'une des revendications 1 à 3, **caractérisée en ce que** la roue de transfert (11) est en partie agencée à l'intérieur de la chambre de sas (14).

5. Machine selon l'une des revendications 1 à 4, **caractérisée en ce que** l'axe de rotation (17) de la roue de transfert (11) est agencé à l'extérieur de la chambre de sas (14).

6. Machine selon l'une des revendications 1 à 5, **caractérisée en ce qu'**au moins une roue de transport (5) est entièrement agencée à l'intérieur de la chambre de sas (14).
